Europäisches Patentamt

**European Patent Office**

**Office européen des brevets**

(11) Numéro de publication: **0 391 792**
**A1**

# DEMANDE DE BREVET EUROPEEN

(21) Numéro de dépôt: **90400911.5**

(51) Int. Cl.⁵: **H04L 12/64, H04L 12/40**

(22) Date de dépôt: **03.04.90**

(30) Priorité: **03.04.89 FR 8904368**

(43) Date de publication de la demande:
**10.10.90 Bulletin 90/41**

(84) Etats contractants désignés:
**AT BE CH DE ES GB IT LI NL**

(71) Demandeur: **JS TELECOM**
**36-38, rue de la Princesse**
**F-78430 Louveciennes(FR)**

(72) Inventeur: **Le Comte, Michel**
**6bis, rue des Closeaux**
**F-91440 Bures Sur Yvette(FR)**

(74) Mandataire: **Joly, Jean-Jacques et al**
**CABINET BEAU DE LOMENIE 55, rue**
**d'Amsterdam**
**F-75008 Paris(FR)**

(54) **Procédé et dispositif d'accès à un medium de communication partagé entre des utilisateurs pouvant transmettre en mode circuit ou paquet avec différents niveaux de priorité.**

(57) Un utilisateur demandeur émet, sur un bus de contention (BC) commun aux utilisateurs, une information de priorité comprenant son niveau de priorité et son adresse, et chaque utilisateur mémorise (en RI0 et REI1) les informations de priorité parvenant par le bus de contention pour déterminer, par comparaison entre les informations de priorité des utilisateurs demandeurs, celui qui est autorisé à émettre dans chacune des voies temporelles élémentaires formant la trame temporelle. Un utilisateur ayant commencé à émettre dans une ou plusieurs voies temporelles est susceptible d'être interrompu avant la fin de son émission par un autre utilisateur demandeur effectuant une préemption en raison d'une information de priorité supérieure, les interruptions successives pouvant être enchaînées. Les contextes des communications interrompues sont sauvegardés (en MC, MT) dans l'ordre des interruptions successives et ressortent dans l'ordre inverse lorsque le médium de communication redevient disponible, les contextes des communications le plus récemment interrompues ressortant les premiers.

Fig. 1

## Procédé et dispositif d'accès à un médium de communication partagé entre des utilisateurs pouvant transmettre en mode circuit ou paquet avec différents niveaux de priorité

La présente invention concerne un procédé et un dispositif d'accès à un médium de communication partagé entre plusieurs utilisateurs potentiels ayant différents niveaux de priorité et susceptibles de transmettre en mode circuit ou en mode paquet dans une trame temporelle de longueur fixe, en utilisant un protocole de contention à temps de décision borné supérieurement.

Il est bien connu de transmettre à la fois des données asynchrones (paquets) et des données synchrones (circuits) dans des trames temporelles sur un même médium de communication. La trame temporelle est partagée en deux zones allouées respectivement aux communications en mode paquet et mode circuit. L'allocation des voies temporelles à ces deux zones peut varier dynamiquement, en fonction du trafic, une priorité étant généralement donnée aux communications en mode circuit.

Les documents FR-A-2 572 606 et EP-A-179 629 décrivent des systèmes de transmission de paquets, transmettant des données ou de la parole, ces derniers ayant priorité et pouvant interrompre la transmission d'un paquet de données, dont la transmission reprend ensuite sous forme de paquet distinct avec son propre en-tête.

Une telle exploitation est assez rigide, suppose simplement deux niveaux de priorité, attribués de façon fixe, nécessite l'adjonction d'une séquence pour interrompre le message, et d'une autre pour en transmettre la fin.

La présente invention a pour but principal de fournir un procédé d'accès à un médium de communication qui permet d'affecter aux utilisateurs des niveaux de priorité souhaités, sans nécessairement faire d'a priori pour les communications en mode circuit ou celles en mode paquet, autorisant ainsi une gestion relativement uniforme pour l'accès au médium, que ce soit en mode circuit ou en mode paquet.

La présente invention vise encore à offrir une exploitation simple des interruptions, qui de plus peuvent s'enchaîner en fonction des niveaux de priorité.

La présente invention a aussi pour but de fournir un procédé grâce auquel la gestion de l'accès au médium est entièrement décentralisée.

Ce but est atteint au moyen d'un procédé d'accès à un médium de communication partagé entre plusieurs utilisateurs potentiels ayant différents niveaux de priorité et susceptibles de transmettre en mode circuit ou en mode paquet dans une trame temporelle de longueur fixe, en utilisant un protocole de contention à temps de décision borné supérieurement, chaque utilisateur demandeur émettant, sur un bus de contention commun aux utilisateurs, une information de priorité comprenant son niveau de priorité et son adresse, procédé selon lequel, conformément à l'invention :

- les informations gérant la contention sont transmises cycliquement par tous les demandeurs souhaitant émettre un nouveau message ou poursuivre l'émission d'un message en cours,

- chaque utilisateur mémorise les informations de priorité parvenant par le canal de contention pour déterminer, par comparaison entre les informations de priorité des utilisateurs demandeurs, celui qui est autorisé à émettre dans chacune des voies temporelles élémentaires formant la trame temporelle, et

- tout utilisateur ayant commencé à émettre dans une ou plusieurs voies temporelles est susceptible d'être interrompu avant la fin de son émission, sur une ou plusieurs parmi lesdites voies temporelles, par un autre utilisateur demandeur effectuant une préemption en raison d'une information de priorité supérieure, les interruptions successives pouvant être enchaînées.

Ainsi, chacun des utilisateurs est à même de savoir quels utilisateurs sont autorisés à émettre dans chacune des voies temporelles (VT) de la trame, puisque chaque utilisateur enregistre les informations de priorité, transmises sur le canal de contention, des utilisateurs successifs demandant l'accès au médium. La gestion de l'accès au médium est de ce fait entièrement décentralisée.

Au niveau de chaque utilisateur, les contextes des communications interrompues sont sauvegardés dans l'ordre des interruptions successives et ressortent dans l'ordre inverse lorsque le médium de communication redevient disponible, les contextes des communications le plus récemment interrompues ressortant les premiers.

La faculté, pour un utilisateur, d'effectuer une préemption interrompant provisoirement un utilisateur ayant une priorité inférieure peut être réglementée.

Ainsi, la préemption peut être temporisée avec une durée dépendant de l'utilisateur devant être interrompu, par exemple selon que ce dernier émet en mode paquet ou en mode circuit, ou en fonction de son niveau de priorité.

L'accès, avec préemption, au médium de communication, est autorisé lorsque l'information de priorité de l'utilisateur demandeur est supérieure à celle de l'utilisateur en train d'émettre et susceptible d'être interrompu.

La contention d'accès au médium de communication est par exemple réglée au moyen d'un protocole de type CSMA-CR (Carrier Sense Multiple Access-Collision Resolution). Avantageusement, l'information du dernier bit de l'information de priorité d'un utilisateur demandeur est utilisée avant la fin du temps bit pour sélectionner éventuellement cet utilisateur dès le temps bit suivant.

Un utilisateur demandeur passe dans l'état "éligible" s'il gagne la contention; il y a ensuite trois cas :
- il accède au bus si ce dernier se libère avant la contention suivante, et devient "élu",
- il n'accède pas au bus avant la contention suivante, mais gagne à nouveau celle-ci, et reste "éligible",
- il n'accède pas au bus avant la contention suivante, perd celle-ci, perd l'état "éligible", et poursuivra la contention.

Un cycle de choix d'un utilisateur demandeur par le protocole CSMA-CR se déroule sur plusieurs bits et a une durée excédant celle de plusieurs VT, sans être nécessairement synchronisé sur le défilement de celles-ci. Pour limiter le temps d'inoccupation du médium de communication entre l'instant où une communication est terminée et l'instant où un nouvel utilisateur demandeur est "élu", une première et une deuxième contention d'accès au médium sont avantageusement effectuées, d'une part, entre tous les utilisateurs demandeurs, y compris celui ayant alors l'accès au médium, et, d'autre part et simultanément, entre tous les demandeurs sauf celui ayant alors l'accès au médium, le résultat de la deuxième contention étant utilisé si l'utilisateur ayant l'accès au médium libère celui-ci pendant le cycle actuel de la première contention. Ces deux contentions peuvent être synchrones ou non.

Afin d'éviter une interruption intempestive d'un utilisateur en train d'émettre, par un utilisateur demandeur ayant même niveau de priorité mais une adresse supérieure, le niveau de priorité d'un utilisateur venant d'accéder au médium de communication peut être automatiquement incrémenté d'un nombre prédéterminé. Ce nombre peut être différent selon que l'utilisateur émet en mode paquet ou en mode circuit et selon son niveau de priorité.

Lorsqu'un utilisateur dont l'émission a été interrompue est à nouveau autorisé à accéder au médium, le contexte sauvegardé de la communication interrompue ressortant, le niveau de priorité de l'utilisateur peut être augmenté afin, notamment, de poursuivre la communication en diminuant la probabilité de nouvelles interruptions.

Dans le cas d'un utilisateur émettant en mode circuit, la ou les VT qui lui sont attribuées dans la trame ont une position fixe ou non.

Selon une particularité de l'invention, la position de la ou des VT peut ne pas être fixée, une attribution de VT étant alors redemandée par l'utilisateur en début de chaque trame, les utilisateurs de plus haut niveau de priorité étant servis les premiers, et leurs VT regroupées selon un nombre déterminé pour n'effectuer qu'une seule demande, sur le bus de contention, pour ce nombre de VT.

Lorsqu'un utilisateur en mode circuit qui a commencé à émettre dans au moins une trame doit redemander l'attribution d'une ou plusieurs VT au cours d'une trame ultérieure, le niveau de priorité de cet utilisateur demandeur est de préférence progressivement augmenté à mesure qu'approche la fin de la trame. Au cas où l'utilisateur n'obtient pas satisfaction avant la fin de la trame, son niveau de priorité continue à être augmenté, cette augmentation pouvant être réalisée de façon très nette au début d'une $n^{\text{ème}}$ trame si l'utilisateur n'a toujours pas eu satisfaction pendant n-1 trames successives, n étant un nombre entier prédéterminé. Un retard variable, pouvant atteindre le total des durées des n trames pendant lesquelles un utilisateur émetteur n'arrive pas à accéder au médium, est appliqué au niveau de l'utilisateur récepteur de façon à compenser la gigue due à l'incertitude sur le retard à l'accès aux VT en émission.

Une même VT peut être partagée entre plusieurs utilisateurs, soit temporellement en fonction des trames successives, soit spatialement au niveau des bits de l'octet, ou autre taille de mot, transmis sur le médium dans chaque voie temporelle. Pour certains utilisateurs à faible débit en mode circuit, la demande d'attribution d'une ou plusieurs VT peut n'être réitérée que toutes les K trames, K étant un nombre entier supérieur ou égal à 2.

Lorsqu'un utilisateur émettant en mode paquet et ayant acquis l'accès au médium est interrompu, et le contexte de la communication sauvegardé, le niveau de priorité de l'utilisateur interrompu peut être augmenté par l'application. Cette augmentation peut par exemple croître en fonction inverse de l'intervalle de temps entre l'instant auquel le dernier bit du message à transmettre serait émis, si l'utilisateur retrouvait immédiatement l'accès au médium, et l'instant où le message arriverait trop tard chez l'utilisateur récepteur. Par cette augmentation du niveau de priorité, la fin du message peut être transmise avant que ressorte le contexte sauvegardé avec le niveau de priorité initial. Lorsque ce contexte ressort, l'utilisateur peut profiter de l'accès au médium pour émettre un message de fin de communication avec une priorité élevée.

On notera encore que d'autres protocoles de contention de type CSMA peuvent être utilisés, notamment un protocole de type CSMA-CD (Carrier Sense Multiple Access-Collision Detection) modifié, à temps de contention borné supérieurement.

L'invention a aussi pour but de fournir un dispositif permettant la mise en oeuvre du procédé.

D'autres particularités et avantages du procédé et du dispositif conformes à l'invention ressortiront à la lecture de la description faite ci-après, à titre indicatif mais non limitatif, en référence aux dessins annexés sur lesquels :

- la figure 1 est un schéma d'un mode de réalisation d'un dispositif d'accès à un médium de communication conforme à l'invention, tel qu'il se trouve implanté au niveau de chaque station reliant des utilisateurs potentiels à ce médium,

- les figures 2 et 3 sont des schémas de deux modes de réalisation de circuits d'émission d'information de priorité d'utilisateur sur un canal de contention, et

- la figure 4 est un schéma partiel d'une variante du mode de réalisation du circuit de la figure 2.

Dans la description qui suit, il est supposé, à titre d'exemple, que le médium de communication partagé entre plusieurs utilisateurs potentiels est un bus de données BD parallèle à 8 bits, l'accès au bus se faisant par contention à temps de décision déterministe du type CSMA-CR. La transmission sur le bus BD se fait dans une trame temporelle de longueur fixe partagée en plusieurs voies temporelles (VT). Chaque VT achemine par exemple 1 octet, sur 8 conducteurs parallèles, c'est-à-dire a une durée égale à 1 temps bit (période d'horloge H).

A chaque utilisateur est associée une information de priorité comprenant son niveau de priorité et son adresse. L'information de priorité est par exemple de 16 bits avec 8 bits pour le niveau de priorité et de 8 bits pour l'adresse.

Un utilisateur souhaitant accéder au bus BD, pour occuper une partie au moins de la bande passante, transmet son information de priorité sur un bus de contention BC constitué par exemple par un fil. L'émission de l'information de priorité est réalisée en envoyant d'abord le niveau de priorité, poids fort en tête, puis l'adresse. Cette dernière est un nombre propre à l'utilisateur permettant de discriminer plusieurs utilisateurs ayant même niveau de priorité.

Les diverses émissions des informations de priorité sur le bus BC par les stations des utilisateurs demandeurs sont synchronisées. Lorsque plusieurs utilisateurs cherchent à accéder en même temps au bus de données BD, la sélection est effectuée conformément au protocole de contention CSMA-CR. Le cycle de contention se déroule sur autant de temps bits qu'il y a de bits dans l'information de priorité. A la fin du cycle de contention, l'information de priorité du demandeur ayant gagné la contention est mémorisée par chaque station. Le demandeur est alors éligible, c'est-à-dire autorisé à tenter de transmettre :

- sans attente et sans préemption s'il trouve, dans la trame, le canal temporel, formé par une ou plusieurs VT, qui lui est nécessaire pour transmettre son message,

- avec attente d'un canal temporel libre si les VT sont occupées par une ou plusieurs communications et qu'il n'est pas prévu de possibilité de préemption par interruption des communications en cours, quel que soit le mode de ces communications et le niveau de priorité de l'utilisateur demandeur ayant gagné la contention,

- avec préemption par interruption des communications en cours correspondant à des émissions par des utilisateurs ayant un niveau de priorité inférieur à celui du nouvel utilisateur demandeur.

Dans le cas d'interruption d'une communication en cours, le contexte de celle-ci :

- reste sauvegardé dans une mémoire de trame MT exploitée en mode "FILO" ("First In-Last Out", premier entré-dernier sorti) au niveau de chaque VT, si la communication interrompue est en mode circuit avec affectation en position fixe, pendant la durée de la communication, des VT allouées à l'utilisateur,

- dans une mémoire de contexte MC de type "FILO", si la communication interrompue est en mode paquet, ainsi que dans le cas où des communications synchrones sont transmises dans des VT qui occupent une position variable d'une trame à la suivante.

Plusieurs interruptions peuvent s'enchaîner si des utilisateurs ayant des niveaux de priorité toujours plus grands obtiennent successivement l'accès au bus BD avec préemption avant que les communications précédemment établies aient pu être terminées.

Plusieurs contextes successifs peuvent ainsi être empilés dans les mémoires MT et MC, ceux ayant les niveaux de priorité les plus forts étant les plus proches de la sortie. Lorsque l'utilisateur, ayant en dernier effectué une préemption, a terminé sa transmission, une décision sur l'autorisation d'accès au bus de données est prise en fonction des contextes qui se présentent à la sortie des mémoires -T et MC et des autres utilisateurs demandeurs éventuels qui se présentent sur le bus de contention BC.

Une explication plus détaillée de la structure et du fonctionnement du dispositif d'accès au bus de données BD sera maintenant donnée.

Synchronisation; base de temps

Chaque station reliée au canal de communication possède une base de temps asservie. La synchronisation des bases de temps des différentes stations, ainsi que la fourniture des signaux cycliques, est effectuée par une station commune, dupliquée à titre de sécurité, qui gère aussi l'initialisation des stations.

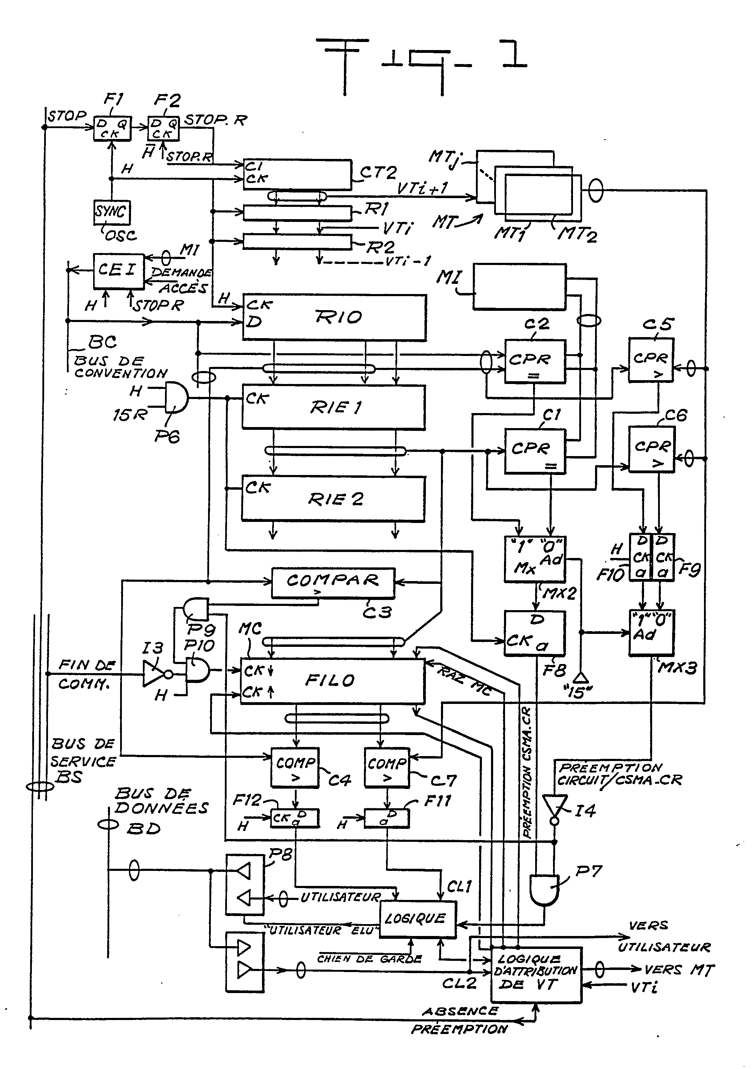

La synchronisation de trame est définie par l'état actif d'un conducteur commun STOP, à l'avant dernier temps bit de la trame, faisant passer à zéro un compteur CT2 (figure 1) au début du dernier temps bit et aussi la sortie d'un registre R1, un temps d'horloge après, donc au début de la VT n° 0.

Le conducteur STOP fait partie d'un bus BS acheminant des signaux de service. A sa réception par chaque station, le signal fourni par le conducteur STOP est retardé d'un demi-temps bit et devient le signal STOP-R qui se termine au milieu de la dernière VT de la trame anticipée vue par CT2; à cet effet, le signal STOP traverse deux bascules F1, F2 de type D en cascade. La première bascule F1 reçoit sur son entrée d'horloge le signal d'horloge H provenant de la base de temps asservie OSC propre à la station, et dont le front actif est en phase avec l'origine des temps bits sur le bus de données BD, tandis que la deuxième bascule F2 reçoit sur son entrée d'horloge le signal $\overline{H}$ complément de H.

Le comptage des VT est effectué au moyen du compteur CT2 qui compte les impulsions du signal d'horloge H provenant de la base de temps asservie OSC propre à la station, et qui est remis à zéro par le signal de synchronisation de trame STOP-R. Le registre R1 à entrées parallèles et à sorties parallèles reçoit le contenu du compteur CT2 de VT tandis qu'un deuxième registre analogue R2 reçoit le contenu du registre R1. Le stockage dans les registres R1 et R2 est commandé, en phase avec l'avance du compteur CT2, par le signal d'horloge H, de sorte que l'état du compteur CT2 apparaît en sortie de R1 et R2 avec un retard respectif de 1 et 2 périodes de H. Le contenu du registre R1 est considéré comme étant le numéro $VT_i$ de la VT actuelle tandis que l'état de CT2 est considéré comme le numéro $VT_{i+1}$ de la VT suivante et le contenu de R2 est considéré comme le numéro $VT_{i-1}$ de la VT précédente.

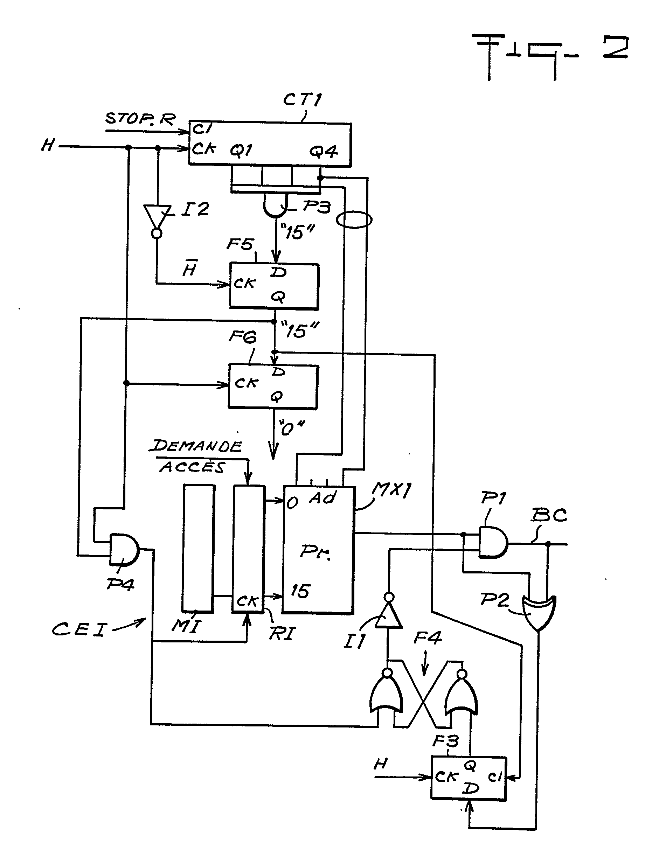

Comme déjà indiqué, le cycle de contention CSMA-CR est réalisé sur 16 temps bits successifs, dans l'hypothèse où un mot d'information de priorité est formé de 16 bits, et se répète tous les 16 temps. A cet effet, au niveau de chaque station, un circuit CEI d'émission d'information de priorité comprend un compteur 4 bits CT1 (figure 2) dont la sortie varie cycliquement de 0 à 15. En supposant que la trame a une durée multiple de 16 temps bit, et que les horloges sont synchrones, le compteur CT1 peut être synchronisé sur le signal de synchronisation de trame. Ainsi, le compteur CT1 compte les impulsions H produites par l'oscillateur OSC en étant périodiquement recalé à 0 par le signal STOP-R. Il peut donc être constitué par l'étage haute fréquence (poids faibles) du compteur CT2, avec éventuellement les éléments correspondants du registre R1.

## Temps de garde

Par ailleurs, du fait des temps de propagation variables entre deux stations selon leur distance, il y a un instant d'incertitude en début et fin de chaque émission sur les bus. De ce fait, la lecture, par chaque station, du bit présent sur un bus s'effectue non pas à la fin du temps bit tel que perçu par chaque station, dont l'oscillateur est asservi par une station centrale dupliquée, mais de façon anticipée de façon à être certain qu'à ce moment toutes les bases de temps des diverses stations sont dans le même état logique. Il suffit de disposer d'une horloge à front actif à l'instant 3/4, par exemple, de chaque période élémentaire H, ce qui se réalise en retardant le signal H complémenté de 1/4 de période, en l'inversant et le retardant par un circuit analogique. La disponibilité d'une horloge à haute fréquence, fournissant H après division de fréquence, permet de disposer directement d'un front d'horloge à l'instant 3/4 de la période de H.

Ce front anticipé attaque l'entrée d'horloge d'un registre D en tampon entre le fil du bus et le point mémoire qui lit le bus à l'instant théorique de transition montante de H.

## Eligibilité d'un utilisateur

Au niveau de chaque utilisateur, l'émission du mot d'information de priorité sur le bus de contention BG est réalisée au moyen du compteur CT1 (figure 2), éventuellement au travers de R1, dont la sortie adresse un multiplexeur MX1 pour lire successivement les 16 bits du mot d'information de priorité chargés dans un registre d'information de priorité RI à entrées parallèles et sorties parallèles. Le signal de sortie du multiplexeur MX1 est transmis sur le bus BC à travers une porte P1 de type ET. Conformément au principe du CSMA-CR, la sortie de cette porte a l'un de ses deux états logiques (état privilégié) qui est capable d'imposer son état au bus BC indépendamment de l'état de sortie des autres portes de même type pouvant attaquer le bus au même instant, au niveau d'autres stations. La porte P1 est bien entendu capable de supporter, sans destruction, un tel fonctionnement, lorsque sa sortie est dans l'autre état logique (état non privilégié). Une sortie de type "collecteur ouvert" peut ainsi avoir un état bas privilégié; de même l'état actif d'un émetteur de lumière.

Un comparateur P2, constitué par une porte OU EXCLUSIF, compare l'état présenté en entrée de la porte P1 par le multiplexeur avec celui présent effectivement sur le bus BC. Le résultat de la comparaison est mémorisé, à la fin du temps bit, dans une bascule F3 de type D, recevant le signal H sur son entrée d'horloge. La sortie de la bascule F3 est reliée à une entrée d'une bascule F4 de type RS. En cas de discordance entre les états présents sur les entrées de la porte P2, à la fin du temps bit, l'état de sortie de la bascule F3 passe à 1, ce qui force la bascule RS dans un état qui bloque la porte P1, à moins que la bascule RS ne soit déjà dans cet état. Dans l'exemple illustré, l'état 1 de la bascule F3 force la bascule F4 à l'état 1 qui est inversé par un inverseur I1 dont la sortie, en 0, est reliée à la porte P1 et la verrouille.

A la fin de chaque cycle CSMA-CR de 16 temps bit, le circuit est remis à l'état initial de la façon suivante. Un décodeur tel qu'une porte P3 de type ET à 4 entrées est relié aux sorties du compteur CT1 pour détecter l'état 15 du compteur. Cet état 15 peut apparaître de façon transitoire lors de changements d'état du compteur CT1. Pour éviter ces effets parasites, l'état 15 est mémorisé avec un retard d'un demi-temps bit dans une bascule F5 de type D connectée à la porte P3 et recevant sur son entrée d'horloge le complément $\overline{H}$ du signal d'horloge H, provenant d'un inverseur I2. L'état "15R" en sortie de la bascule F5 est ainsi présent pendant la seconde moitié de l'état 15 et la première moitié de l'état 0 en sortie du compteur CT1. Il est par ailleurs avec une phase retardée par rapport aux transitions du signal d'horloge H puisque celui-ci crée le signal "15R" après traversée de couches logiques. Le signal "15R" recouvre donc entièrement la première demi-période du signal d'horloge pendant l'état 0 en sortie du compteur CT1.

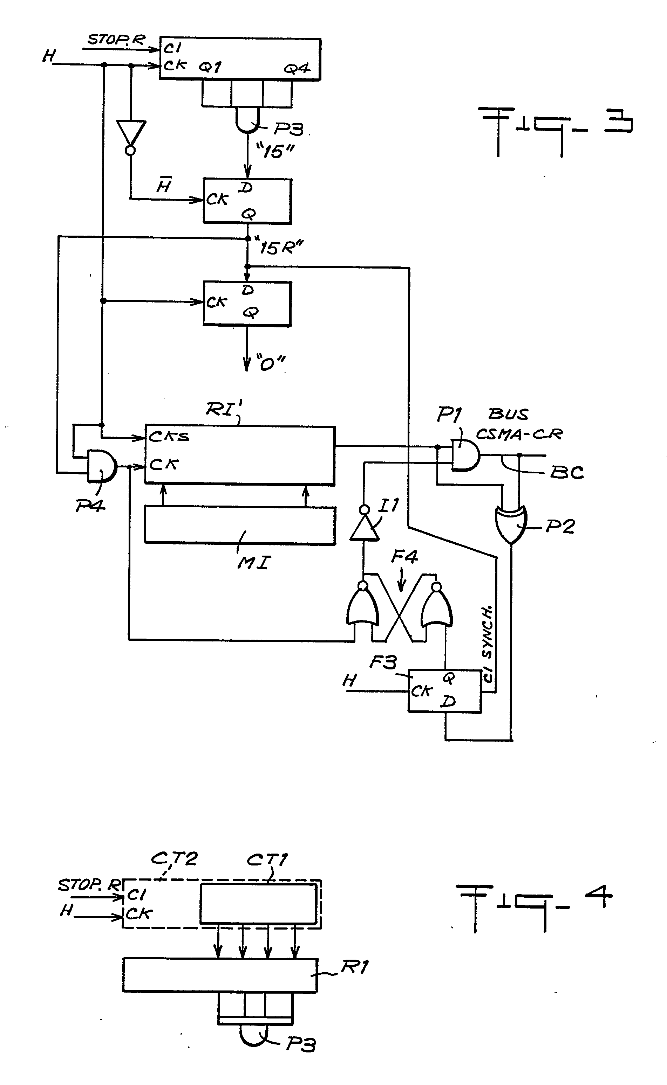

Dans le cas où le compteur CT1 est constitué par l'étage haute fréquence du compteur CT2, les 4 entrées de la porte P3 peuvent être reliées aux 4 sorties haute fréquence (poids faibles du registre R1, comme montré sur la figure 4).

A la fin de l'état 15 du compteur CT1 (c'est-à-dire, dans le cas du circuit de la figure 4, au début de l'état 0 des 4 bits haute fréquence du registre R1), une porte P4 de type ET recevant les signaux H et "15R" commande le chargement parallèle dans le registre RI du mot d'information de priorité dans une mémoire d'information de priorité locale MI et ramène la bascule F4 dans l'état autorisant le passage à travers la porte P1 des signaux de sortie du multiplexeur MX1. Le signal "15R" est par ailleurs appliqué à l'entrée de remise à 0 de la bascule F3 pour faire passer celle-ci, à la fin de l'état 15 du compteur CT1 (au début de l'état 0 des 4 bits haute fréquence du registre R1) à un état ouvrant la porte P1 d'accès au bus BC.

Au niveau de chaque station, le chargement du registre d'information de priorité RI n'est autorisé que lorsqu'un signal DEMANDE D'ACCES est produit par les équipements de l'utilisateur. En l'absence de ce signal, le contenu du registre RI est forcé à une valeur correspondant à l'état non privilégié sur le bus de contention BC. En variante, l'absence du signal DEMANDE D'ACCES pourrait être utilisée pour bloquer la porte P1 donnant l'accès au bus BC.

On notera encore, sur la figure 1, la présence d'une bascule F6 de type D qui reçoit le signal "15R" sur son entrée de données et le signal H sur son entrée d'horloge, pour fournir un signal "0" correspondant à l'état 0 en sortie du compteur CT1 et dont l'utilisation sera indiquée plus loin.

La figure 3 illustre une variante de réalisation du circuit d'émission d'information de priorité sur le bus de contention BC. Le circuit de la figure 3 diffère de celui de la figure 2 uniquement par le fait qu'un registre d'information de priorité RI' à entrées parallèles et sortie série est utilisé à la place du registre RI et du multiplexeur MX1. La lecture des bits dans le registre RI' est commandée par le signal d'horloge H tandis que le chargement du registre RI' est commandé par le signal de sortie de la porte P4, fournissant un front actif en début d'instant 0.

Chaque station comprend un registre RI0 (figure 1) à entrée série et sorties parallèles, dans lequel sont enregistrés, au rythme du signal d'horloge H, les bits correspondant aux états successifs détectés sur le bus de contention BC. A la fin du cycle CSMA-CR, le contenu du registre RI0 est chargé dans un registre d'information de priorité éligible RIE1 sous la commande du signal de sortie d'une porte P6 de type ET recevant les signaux H et "15R".

Ainsi, à la fin du cycle CSMA-CR, chaque utilisateur a mémorisé, dans le registre RIE1, l'information de priorité de l'utilisateur qui a celle la plus élevée, parmi ceux qui ont demandé l'accès au bus de données BD, et qui va transmettre dans le canal temporel qui suit.

A la réception du dernier bit du mot d'information de priorité, le contenu du registre RI0 est transféré dans le registre RIE1 tandis que le contenu de ce dernier est transféré dans un registre RIE2 à entrées parallèles fournissant un second choix de demandeur.

Le registre RIE1 peut être à entrée d'horloge commandant l'entrée de l'information et la mémorisant sur un front ; il doit mémoriser l'état de RI0 pendant que celui-ci contient tous les bits du dernier mot reçu, c'est-à-dire pendant l'instant "0". En pratique, la mémorisation peut donc s'effectuer :
- en début d'instant "0", en lisant toutes les 16 sorties de RI0 et en les appliquant aux entrées homologues de RIE1, en retardant cependant l'horloge de RIE1 d'un délai suffisant pour que les sorties de RI0 soient stabilisées (fonction ET retardé de "15R" et de H),
- en milieu d'instant "0" en inversant la phase de l'horloge (fonction ET de "0" et H complémenté),
- en fin d'instant "0" : fonction ET de "0-R" (zéro retardé) et de H, ce qui permet de disposer encore pendant l'instant "0" des informations contenues dans un registre RIE2, et qui sont détruites par le transfert de RI0 vers RIE1, qui nécessite, préalablement ou simultanément, le transfert de RIE1 vers RIE2.

On peut aussi utiliser un registre "transparent", dont l'état de la sortie suit celui de l'entrée tant que l'horloge est à l'état 1 (par exemple) et qui conserve son dernier état lorsque l'horloge passe à 0.

On peut appliquer, en entrée d'horloge de RIE1, une impulsion positive pendant toute la durée de l'instant "0", obtenue par exemple par un décodeur de l'état du compteur CT2. Le décodage doit être exempt d'états transitoires en sortie lors de l'avance de CT2. Pour ce faire, on peut appliquer les sorties du décodeur aux entrées de données d'une bascule D à 16 bits, dont l'entrée d'horloge serait H, selon le principe précédemment décrit pour CT1 et R1. Les 16 sorties de la bascule D sont donc retardées d'un temps et l'entrée "15" devient ainsi le signal "0" en sortie. Les signaux de décodage d'un état de CT2 ainsi dépourvus d'états transitoires peuvent être utilisés pour fournir un front actif lors de certains changements d'état de CT2, en remplacement d'une porte ET recevant un état décodé avec transitoires, et H complémenté, servant à éliminer les transitoires. Dans le cas présent, on pourrait appliquer sur P6, l'état "0" et H complémenté, ce qui fournirait un front descendant mémorisant en fin d'instant "0".

Dans le cas d'une horloge active pendant toute la durée de l'état "0", appliquée à des registres "transparents", les sorties de RIE1 reproduisent celles du mot qui vient d'être mémorisé au début de l'instant "0" dans RI0, avec un retard par rapport à H dû aux traversées de RI0 puis RIE1. Ceci présente l'avantage de faire changer l'information en début de cycle, unifiant ainsi les cycles de RI0 et RIE1, sans avoir à retarder l'horloge de RIE1.

On peut encore utiliser pour RIE1 une entrée d'horloge mémorisant sur un front, et appliquer ce front actif en début d'instant "0", alors que RI0 n'a pas encore décalé d'une position son mot pour y mémoriser le dernier bit. On relie alors la sortie $\overline{n-1}$ de RI0 à l'entrée n de RIE1, ce qui permet $\overline{de}$ recevoir les 15 bits $\overline{de}$ tête ; le 16ème est lu directement sur le bus de contention BC, en reliant à celui-ci la 16ème entrée parallèle de RIE1 : sa mémorisation dans RI0 est alors inutile.

Le registre RIE2 est chargé de sauvegarder les informations contenues dans RIE1 ; de façon préférentielle, il est à horloge à front mémorisant, montant par exemple, l'instant théorique de celui-ci étant simultané au front d'horloge qui modifie les sorties de RIE1.

Une horloge à front montant mémorisant, qui serait appliquée à RIE2 préalablement à celui allant sur RIE1, ou bien l'utilisation d'un registre transparent pour RIE2, sont possibles, mais font perdre prématurément des informations antérieures, puisque RIE2 contient alors la même information que RIE1, entre l'instant du front modifiant le contenu de RIE2 et celui modifiant le contenu de RIE1. La reconnaissance de son éligibilité par la station d'un utilisateur est effectuée au moyen d'un comparateur C1 qui reçoit, d'une part, le contenu de la mémoire d'information de priorité locale MI et, d'autre part, le contenu du registre d'information de priorité éligible RIE1. Afin que cette reconnaissance puisse être effectuée avant le début d'un nouveau cycle CSMA-CR, les 15 premiers bits stockés dans le registre RI0 sont appliqués à une entrée d'un deuxième comparateur C2 en même temps que le 16ème bit en cours de stabilisation sur le bus de contention BC, le comparateur C2 recevant sur une autre entrée le contenu de la mémoire MI.

L'égalité entre l'information de priorité locale et celle venant du bus BC se traduit par un état actif en sortie de C2 uniquement à la fin du temps "15", et en sortie de C1 à la fin des autres temps. Le signaux issus de C2 et C1 sont respectivement appliqués aux deux entrées d'un multiplexeur MX2, la première étant transmise à la sortie de MX2 pendant l'instant "15", et la deuxième pendant le reste du cycle. La sortie du multiplexeur MX2 est appliquée à l'entrée de données d'une bascule F8 de type D dont l'entrée d'horloge reçoit le signal de sortie de la porte P6, fournissant un front mémorisant en début d'instant "0". Le signal de sortie "PREEMPTION CSMA/CR" de la bascule F8 est appliqué à un circuit logique de traitement GL1 à travers une porte P7 de type ET susceptible d'être bloquée par la sortie d'un inverseur 14 recevant un signal PREEMPTION CIRCUIT/CSMA-CR, dont la création est expliquée plus loin. Le circuit logique CL1 produit notamment un signal "UTILISATEUR ELU" qui commande l'ouverture de portes P8 d'accès en écriture sur le bus de données BD afin de laisser passer des données provenant de l'utilisateur.

Entre l'utilisateur et les portes P8, il peut y avoir des circuits d'aiguillage spatial ou temporel, tels multiplexeur vers le bus, et démultiplexeur en sens inverse, pour sélectionner un utilisateur parmi plusieurs reliés à la station, piloté par le circuit logique CL2.

Les circuits CL1 et GL2 sont constitués d'un ensemble de circuits logiques combinatoires associés à un microprocesseur et à des mémoires RAM contenant le programme et les données. Ces ensembles sont reliés entre eux et reçoivent la signalisation issue du poste téléphonique ou du terminal de l'abonné, qui est raccordé à une interface de ligne d'abonné, elle-même reliée à ces deux circuits. Cette logique remplit donc le rôle usuel à toute logique centrale d'autocommutateur, échangeant de la signalisation avec l'abonné, gérant l'accès au réseau de connexion, et pour ce faire, engendrant les signaux prévus dans le protocole d'échange avec les autres entités logiques internes ou externes à l'appareil.

Les circuits logiques CL1 et CL2 utilisent par conséquent les circuits d'autocommutateurs connus, notamment de type privé (PAB). Un tel autocommutateur est décrit par exemple dans les notices suivantes : Notice d'agrément PTT n° NG 90 PJ 87112 (sept. 1987) du JISTEL 1000, Notice d'agrément PTT n° 90 PJ 87136 (déc. 1987) du JISTEL 500, et Notice d'agrément PTT n° NG 90 PJ 86029 (mars 1986) du JISTEL IS.

Les processus de traitement des appels sont maintenant décrits.

### Communication en mode circuit.

On suppose que le demandeur, dont l'information de priorité vient d'être écrite dans le registre RIE1, émet en mode circuit, et est élu. Le demandeur se voit donc attribuer le médium.

Le demandeur élu envoie d'abord sur le bus de données BD un premier octet de service indiquant le nombre N de VT qu'il veut réserver, tout en émettant sur un conducteur particulier du bus de service BS un signal MODE CIRCUIT pendant le premier temps bit (ou un bit de l'octet de tête, ou un bit en fin du mot d'information de priorité sur le bus de contention BC), ce qui amène chaque station à mémoriser ce premier octet et à engager le processus de réservation de VT en mode circuit, au moyen d'un circuit logique CL2 d'attribution des VT, connecté au bus de données BD, et gérant les mémoires MT qui décrivent l'occupation, en mode circuit, des VT.

Le premier octet de service, transmis sur un temps bit, est stocké dans le circuit logique CL2 en même temps que le numéro de la VT actuelle.

A partir de cette VT, l'occupation des N-1 premières VT libres suivantes est marquée en mémoire de trame MT, au niveau de chaque station. Le marquage consiste à inscrire l'information de priorité du demandeur élu dans les positions correspondantes de la mémoire MT, au fur et à mesure que les VT défilent, l'adressage de la mémoire MT en écriture étant effectué par le circuit logique CL2 d'attribution des VT. Il est à noter que les N VT ainsi marquées occupées peuvent ne pas être successives si certaines sont déjà attribuées à une précédente communication de priorité plus élevée.

Les signaux de signalisation relatifs à la communication en mode circuit qui est établie sont transmis dans un canal "Sémaphore". Celui-ci pourrait également acheminer l'octet de tête spécifiant la bande passante demandée.

A la trame suivante, le contenu des positions successives de la mémoire de trame MT est lu par adressage de la mémoire en lecture au moyen du contenu du compteur de voies temporelles CT2, l'adresse fournie par le compteur étant celle $VT_{i+1}$ de la VT suivant la VT en cours . L'utilisateur élu, reconnaissant son identité, sait qu'il dispose de la VT suivante pour émettre un octet sur le canal de données. Il en est de même pour chaque VT réservée par l'utilisateur élu.

On notera que le temps bit étant suffisamment long pour assurer la propagation sur le bus, la logique de chaque station a le temps d'effectuer plusieurs opérations, par exemple de lecture et d'écriture dans les mémoires. En particulier, la lecture des informations relatives à la VT suivante peut s'effectuer en utilisant un multiplexeur permettant d'aiguiller la sortie du compteur CT2, au lieu de la sortie de R1, vers les entrées d'adressage de la mémoire de trame MT.

Par ailleurs, le ou les utilisateurs récepteurs destinataires de la transmission par l'utilisateur élu, ayant reçu l'information de priorité de celui-ci par le bus BC, prennent en compte l'octet reçu dans chaque voie temporelle dont l'occupation par l'utilisateur élu est enregistrée en mémoire de trame au niveau de ce ou ces récepteurs.

Le canal "Sémaphore" transmet des informations une fois la communication établie, tandis que celles à passer avant l'établissement : nombre de VT, destinataire, peuvent être contenues dans des octets réservés à cet effet dans le bus données BD, en début de communication.

En cas de double appel et transfert à un utilisateur C, lors d'une communication circuit entre utilisateurs A et B, il faut pouvoir aller interroger la logique de l'abonné C pour savoir s'il est en communication, s'il a la classe voulue pour recevoir un transfert, etc, ce qui nécessite un canal de communication entre les logiques gérant les utilisateurs, dont l'un : C peut ne pas être un utilisateur en communication. Si la logique gérant l'utilisateur C répond que le double appel et transfert est possible, l'utilisateur A transférant peut alors faire une demande par le système de contention selon le principe général exposé.

Ce canal sémaphore peut être séparé des autres bus ou intégré. Par exemple, on peut effectuer des demandes de communication, par le bus de contention, pour passer des paquets de signalisation dans le bus de données. D'une façon générale, on peut se restreindre à un seul bus utilisé en partage de temps pour transmettre la contention, la signalisation et les données.

Dans chaque trame, à la fin de la suite de VT réservée à une communication circuit, on peut rester en mode circuit pour une autre communication, ou passer en mode paquet, ou libérer la VT.

Lorsqu'un utilisateur en mode circuit est élu, le niveau de priorité de celui-ci est incrémenté d'une unité, ce qui peut être réalisé en un temps bit par forçage à 1 du bit de poids faible, si le niveau de priorité initial était pair. Ceci est destiné à traiter le cas où plusieurs utilisateurs en mode circuit ont le même niveau de priorité. Puisque la comparaison porte sur les informations de priorité comprenant les niveaux de priorité et les adresses, un utilisateur d'adresse supérieure risquerait d'effectuer une préemption sur une communication établie pour un utilisateur ayant initialement le même niveau de priorité, ce qui ne serait pas justifié et pourrait se produire souvent. Il en résulte que si des utilisateurs en mode circuit peuvent avoir divers niveaux de priorité, ceux-ci doivent être, au départ, espacés d'au moins deux unités. Le forçage à 1 du bit de poids faible du niveau de priorité est réalisé par les circuits logiques CL2 des stations, avant le marquage d'occupation de VT dans la mémoire de trame MT.

L'utilisateur en mode circuit, qui a déjà une communication établie avec marquage des VT dans la mémoire MT, effectue une demande implicite d'attribution de VT puisque le contenu de la mémoire MT est lu, au niveau de chaque station, au rythme de défilement des VT. Cette station n'utilise donc plus le CSMA-CR à cet effet.

L'information de priorité de l'utilisateur en mode circuit ayant réservé une VT est lue dans la mémoire de trame au cours du temps bit précédant cette VT grâce à l'adressage anticipé effectué par le compteur CT2. Cette information de priorité est comparée avec celle contenue dans le registre d'information de priorité éligible RIE1 au moyen d'un comparateur C6. Afin qu'une décision puisse être prise le cas échéant au dernier moment avant le début de la VT concernée, l'information de priorité lue dans la mémoire trame est comparée au moyen d'un comparateur C5 avec le mot constitué par les 15 premiers bits stockés dans le registre RIO et le 16$^{ème}$ bit en cours de stabilisation sur le bus BC. Les résultats des comparaisons effectuées sont stockés dans des bascules F9, F10 de type D recevant le signal H sur leur entrée d'horloge. Un multiplexeur MX3, adressé tout comme MX2, reçoit les sorties des bascules F9, F10 pour produire le signal PREEMPTION CIRCUIT/CSMA-CR. Les comparateurs C5 et C6 fournissent en sortie un signal actif au niveau haut lorsque l'information de priorité de l'utilisateur inscrite en mémoire de trame est supérieure à celle de l'utilisateur venant par le bus de contention. Un nouveau demandeur, inscrit dans le registre RIO ou RIE1, peut ainsi avoir priorité sur un abonné inscrit dans la mémoire de trame MT. Dans ce cas, le signal PREEMPTION CIRCUIT/CSMA-CR est en 0. La préemption subie par une communication en mode circuit déjà inscrite en MT n'implique pas de sauvegarde de contexte dans la mémoire MC. Le signal PREEMPTION CIRCUIT/CSMA-CR en 0, inversé par l'inverseur I4 ouvre la porte P9 qui reçoit le signal de sortie du comparateur C3, rangeant le contexte du registre RIE1 dans la mémoire de contexte MC si RIO a reçu une information de priorité supérieure, détectée par C3. De même la sortie de I4, en 1, ouvre la porte P7 qui détecte le gain, par l'utilisateur demandeur, de la contention sur le bus BC, ainsi que le gain de la contention, interne aux stations, avec les modes circuits établis, écrits dans MT. Le circuit logique CL1 peut alors commander la connexion du demandeur au bus BD.

Lorsqu'une préemption reste exercée sur une communication en mode circuit, le contexte de celle-ci reste sauvegardé en mémoire de trame MT comme expliqué plus loin.

La conséquence d'une interruption sera que le code circuit interrompu ne pourra passer sur une autre VT de la trame si l'on veut éviter un saut de phase dans la suite des octets transmis. Ceci peut cependant être toléré dans certaines applications en mode circuit, telle la transmission de la voix si cela ne se produit pas souvent.

Une solution peut être de retarder l'utilisation par le récepteur des bits transmis en mode circuit au cours d'une trame jusqu'à la fin de celle-ci, pour pouvoir compenser les sauts de phase créés par des changements de VT dans la trame.

Dans le cas où un utilisateur en mode circuit ne peut trouver de VT disponibles dans une ou plusieurs trames successives, une augmentation du niveau de priorité peut être décidée pour que l'utilisateur se voie affecter des VT supplémentaires afin d'écouler les données circuit bloquées. Cette augmentation peut être progressive, tant que les VT supplémentaires nécessaires ne sont pas trouvées, avec une brusque augmentation au bout de n trames si la demande n'a pas été satisfaite pendant n-1 trames successives. Un circuit tampon doit être prévu chez l'utilisateur récepteur pour lisser les à-coups du débit avec un retard maximum correspondant à la durée de n trames.

La préemption étant assez sévère pour les utilisateurs en mode circuit de niveau de priorité inférieur, un processus intermédiaire peut être utilisé selon lequel il peut subsister des utilisateurs de très haut niveau de priorité pouvant immédiatement interrompre un utilisateur en mode circuit de niveau de priorité inférieur, mais où les autres utilisateurs en mode circuit, de niveau moyen de priorité,temporisent la préemption sur un utilisateur en mode circuit de niveau inférieur. Dans ce dernier cas, l'utilisateur de plus haut niveau de priorité retarde la préemption jusqu'à ce qu'un nombre déterminé de contentions avec l'utilisateur de plus bas niveau de priorité se soient produites. Ceci permettra souvent au premier utilisateur de trouver plus facilement le nombre de VT qui lui sont nécessaires et de limiter la gêne occasionnée au deuxième utilisateur. Il est alors bien entendu nécessaire que l'information "préemption temporisée ou non" soit contenue en fin de mot d'information de priorité du nouvel utilisateur demandeur, pour pouvoir être interprétée de la même manière par tous les utilisateurs. Pour ce faire, il peut émettre 1 bit supplémentaire après la contention, sur le bus BC, indiquant qu'il renonce au gain de cette contention, ce bit ayant pour effet d'annuler tous les autres bits précédents, déjà mémorisés, et affichant ainsi un niveau de priorité nul. Ce bit peut simplement agir au niveau des comparateurs, ou les circuits qui suivent leurs signaux de sortie jusqu 'aux bascules D mémorisant la comparaison, pour forcer l'état voulu dans ces dernières.

Une autre solution, évitant l'occupation inutile du bus BC, consiste à lancer localement une temporisation sur la durée d'attente pour l'accès au bus de données BD, ces détections de contention étant effectuées dans la station, sans émission sur le bus de contention.

On notera enfin qu'une communication en mode circuit utilise normalement un canal temporel constitué d'une ou plusieurs VT fixes dans chaque trame. En supposant que la trame a une période de 125 s, la transmission d'une voie à 64 kbits/s peut être assurée au moyen d'un octet. Si la période est plus grande, le débit de chaque VT est inférieur et nécessite d'envoyer un mini-paquet qui introduit un retard et nécessite un lissage en réception. Si la période est plus petite, on pourra, en gardant un même débit, soit réduire la taille du bus parallèle en même proportion, soit transmettre plusieurs communications dans un même octet, c'est-à-dire dans une même VT.

## Sauvegarde du conterte d'une communication en mode paquet interrompue

Les communications déjà établies en mode paquet peuvent être interrompues en cas de demande provenant d'un utilisateur en mode circuit de priorité supérieure. Le contexte de la communication interrompue est sauvegardé dans la mémoire de contexte MC de la façon suivante.

Au temps 15 du cycle CSMA-CR, les 15 premiers bits de l'information de priorité, ainsi que le 16ème en cours de stabilisation sur le bus BC, sont appliqués sur une entrée d'un comparateur C3 qui reçoit sur son autre entrée l'information de priorité de l'utilisateur actuel en mode paquet stockée dans le registre RIE1. Le comparateur détecte que l'information de priorité du nouvel utilisateur demandeur en mode circuit est supérieure à celle stockée dans RIE1 et fournit en réponse un signal qui, après passage à travers deux portes P9, P10 de type ET, commande le stockage dans la mémoire MC de l'information de priorité dans le registre RIE1. La porte P10 reçoit, sur deux autres entrées, le signal d'horloge H et le complément d'un signal "FIN DE COMMUNICATION" fourni par un conducteur particulier du bus de service BS, ce signal étant inversé par un inverseur I3. Comme indiqué plus loin, le signal "FIN DE COMMUNICATION" est émis en cas de relâchement d'une communication en mode paquet ou en mode circuit. Ainsi, le signal "FIN DE COMMUNICATION", en bloquant la porte P10 à la fin du cycle CSMA-CR, évite la sauvegarde dans la mémoire MC du contexte d'une communication qui en fait vient de se terminer. La porte P9 reçoit, sur une autre entrée le complément d'un signal PREEMPTION CIRCUIT/CSMA-CR inversé par un inverseur I4, les conditions d'émission du signal PREEMPTION CIRCUIT/CSMA-CR étant décrites plus loin.

## Sauvegarde du contexte d'une communication en mode circuit interrompue

Une communication en mode circuit peut être interrompue temporairement, la contention pouvant venir d'un utilisateur en mode circuit( ou d'un utilisateur en mode paquet. Une interruption d'une communication en mode circuit par un utilisateur en mode paquet peut être nécessaire, par exemple pour garantir un temps d'accès minimal pour certaines données urgentes : arrêt d'urgence dans un processus industriel, données de systèmes d'armes, données de pilotage d'un avion...

Ainsi, lorsque le demandeur retenu à la fin du cycle CSMA/CR n'est pas l'utilisateur initial de la VT suivante, le nouvel utilisateur peut être en mode paquet ou en mode circuit.

Dans le premier cas, le nouvel utilisateur élu va se maintenir ou pas, par contention CSMA-CR sur quelques VT ou sur quelques trames, s'il est prioritaire et avec un message très long.

Dans le deuxième cas, le nouvel utilisateur en mode circuit établit sa communication comme indiqué pour ce mode, en occupant certaines VT qui ont pu être marquées comme réservées à des utilisateurs interrompus moins prioritaires. Il faut noter que les VT affectées à ce nouvel utilisateur effectuant une préemption peuvent ne pas être successives si un utilisateur de priorité encore plus élevée a des VT réservées dans une zone temporelle demandée par le nouvel utilisateur, auquel cas celui-ci termine son occupation de VT au-delà de celles réservées par l'utilisateur encore plus prioritaire.

L'occupation des VT par le nouvel utilisateur élu est marquée en mémoire de trame MT. Celle-ci doit alors être partagée en plusieurs couches de mémoires de trame. Après une première préemption d'un mode circuit, sur un autre mode circuit, l'occupation préalable des VT où il y a eu préemption reste marquée dans une mémoire MT1 de base, qui sert de sauvegarde de contexte initial, tandis que l'occupation actuelle des VT est marquée dans une deuxième mémoire de trame MT2. Le nombre de mémoires de trame MT1, MT2, ..., MTj, ... doit être étendu du fait qu'il peut y avoir des préemptions en chaîne.

La mémoire MT est ainsi constituée de plusieurs couches de mémoires élémentaires $MT_j$, chacune correspondant à une préemption de niveau supérieur. Du fait du traitement individualisé des VT au niveau de la préemption, un utilisateur ayant plusieurs VT, successives ou pas, peut avoir celles-ci réservées dans des couches de $MT_j$ différentes, c'est-à-dire ayant subi des contentions différentes, et qui, de plus, évoluent au fil du temps à mesure de la libération de certaines VT, ou de l'arrivée de nouvelles communications prioritaires.

La mémoire MT est donc exploitée en FILO, c'est-à-dire que l'on accède au contexte de plus haut niveau de priorité dans chaque VT, la différence avec la mémoire MC étant que cette dernière ne perçoit pas la notion de VT pour ce qui est du niveau de priorité.

Les comparateurs C5, C6 cités plus haut, effectuant les comparaisons entre l'information de priorité reçue par le CSMA-CR et celle de l'utilisateur actuel en mode circuit, devront donc lire systématiquement, pour chaque VT, la mémoire de trame de plus haut rang parmi celles qui comporte une indication d'occupation pour cette VT. Le nombre de $MT_j$ est limité, c'est-à-dire que lorsqu'une préemption est détectée sur un utilisateur inscrit dans la $MT_j$ de rang le plus élevé, elle est refusée. Les comparaisons évoquées plus haut donnent alors systématiquement un résultat favorable à cet utilisateur lorsque la logique d'attribution des VT détecte que toutes les mémoires de trame $MT_j$ sont occupées pour cette VT.

Pourrait convenir tout autre mode de réalisation de mémoires de trame qui contiennent les informations relatives à toutes les VT de la trame, et comportent de plus l'historique des préemptions successives au niveau de chaque VT. On peut donc représenter ceci comme une mémoire unique FILO ayant une largeur de $\underline{T}$ VT et une profondeur de P pour les préemptions.

## Modes de réalisation de la mémoire MT dans la fonction FILO et son exploitation

Un premier mode de réalisation consiste à utiliser une ou des mémoires de grande capacité, dans lesquelles chaque intersection largeur-profondeur dispose d'une zone mémoire bien déterminée. Par exemple, si le mot décrivant la communication nécessite 64 bits, on peut y affecter les 6 bits d'adresse de poids faible, les autres bits différenciant des autres intersections.

Dans le cas où il faut décaler ces contextes d'une couche en profondeur, il faut sortir tous ceux-ci relatifs à cette VT, puis les rentrer à leur nouvelle position, le contexte de niveau supérieur étant alors toujours rangé à la même adresse, et repoussant les autres.

Une autre possibilité est de définir une sorte d'adressage flottant, c'est-à-dire d'inscrire un nouveau contexte qu'il faut mémoriser, à côté du précédent, et de mémoriser simplement un pointeur, définissant, au moyen des poids forts de l'adresse de cette VT, où est rangé le contexte le plus récent.

Cette valeur du pointeur peut être rangée avec les autres données relatives à cette VT, ou bien dans une zone commune à toutes les VT, ou dans une autre mémoire rapide de taille plus petite, ce qui permet d'accélérer la lecture et l'écriture dans la mémoire MT.

Lorsqu'un contexte ressort de MT et est supprimé, ce pointeur est décrémenté (par exemple) de 1 (par exemple) pour pointer le contexte suivant de cette VT. Il est alors superflu d'effacer un contexte inutile, car il est hors de la zone de déplacement possible du pointeur.

Un autre mode de réalisation des $MT_j$ est d'utiliser des registres à décalage de longueur $\underline{P}$, un ou plusieurs en parallèle pour avoir le nombre nécessaire de bits par VT, qui permettent de décaler les contextes entre couches voisines dans un sens ou dans l'autre.

Ceci permet d'aller très vite, mais n'est pas adapté à des trames de grande taille.

Dans le cas où la position de la couche la plus prioritaire n'est pas fixe, on peut soit compter, au moyen d'un compteur, le nombre de décalages effectués, et le mémoriser, soit avoir un bit en 1 dans la couche la plus prioritaire, ou, de façon pratique, dans toutes les couches ayant un contexte. Un codeur de priorité reçoit tous les bits (1 bit à l'état 1 par couche ayant un contexte stocké et 1 bit à l'état 0 pour les couches n'ayant pas de contexte). Il fournit alors l'adresse de la couche active la plus prioritaire, sous forme d'un deuxième pointeur.

Ce principe peut aussi être appliqué lorsqu'on utilise des mémoires de grande capacité, à condition de lire au moins les bits d'occupation de toutes les couches. Il peut être alors judicieux de ranger les bits d'occupation des couches, non plus 1 bit à chacune des adresses, mais de les regrouper en un mot à une adresse supplémentaire pour chaque VT, pouvant donc être lue par un seul adressage de la mémoire.

De ce point de vue, on peut aussi utiliser une mémoire adressable par son contenu. Dans ce cas on met en 1 un bit spécifique dans le mot du dernier contexte rangé et force à 0 le bit homologue du contexte précédent, les bits homologues des autres contextes ayant été déjà forcés à 0 de la même façon. La mémoire pointe ainsi automatiquement son dernier contexte de la VT en cours, en agissant sur les poids intermédiaires, les poids forts relatifs aux VT étant fixés.

Il peut se produire qu'un utilisateur en mode circuit soit interrompu par un autre utilisateur en mode circuit ayant un niveau de priorité plus élevé, avant que l'occupation des VT demandées par le premier utilisateur ait été marquée en mémoire de trame MT. Une sauvegarde du contexte de la communication interrompue est alors effectuée dans la mémoire MC comme s'il s'agissait d'une communication en mode paquet, avec en plus le rangement, dans le contexte sauvegardé, du solde de VT à attribuer. Le nombre caractérisant ce solde est fourni par le circuit logique CL2 chargé de l'attribution des VT et lui est restitué lorsque le contexte ressort de la mémoire MC.


## Communication en mode paquet

Un utilisateur mode paquet venant d'accéder au bus de données BD commence à émettre sur celui-ci un nombre M correspondant à un numéro de paquet, attribué par la station, puis l'adresse du ou des destinataires, ainsi que les signaux de service propres à son application, et transmet son message sur une suite de VT, voire sur quelques trames, selon la longueur du message, sauf interruption.

Lorsqu'un utilisateur en mode paquet, ayant un niveau de priorité supérieur à celui qui émet, se présente sur le bus de contention BC, il prend le bus données, et le contexte de la communication en mode paquet est sauvegardé en mémoire MC comme dans le cas d'une préemption par un utilisateur en mode circuit.

Il peut donc y avoir une succession de contextes de communication en mode paquet sauvegardés en mémoire MC, les contextes ayant les niveaux de priorité les plus élevés étant les plus proches logiquement de la sortie de la mémoire MC.

On peut prévoir qu'un utilisateur en mode paquet, qui doit en permanence renouveler sa demande d'accès sur le bus de contention BC, ait un niveau initial de priorité peu élevé, si un retard d'acheminement du message est toléré, mais que ce niveau de priorité augmente au fur et à mesure que diminue la marge de temps pour acheminer le dernier octet. L'accroissement du niveau de priorité peut par exemple être en raison inverse de l'intervalle de temps entre l'instant auquel le dernier bit du message à transmettre serait émis, si l'utilisateur retrouvait immédiatement l'accès au bus de données, et l'instant où le message arriverait trop tard chez l'utilisateur récepteur.

Il peut alors se produire l'inconvénient suivant. Un utilisateur émetteur qui a eu accès au bus de données peut avoir été interrompu successivement par plusieurs utilisateurs ayant des niveaux de priorité plus élevés. Or, l'utilisateur qui a demandé initialement l'accès au bus de données peut décider d'augmenter le niveau de priorité tant que la totalité du message n'est pas transmise, comme indiqué ci-dessus. Le niveau de priorité sauvegardé en mémoire MC sera alors périmé. Il est donc nécessaire que l'utilisateur réitère sa demande d'accès au bus de données à chaque fois que son niveau de priorité augmente, et il pourra alors transmettre la fin du message sans attendre la sortie du contexte sauvegardé, en transmettant, dans l'en-tête, l'indication qu'il s'agit de la suite du message interrompu, au moyen de l'envoi du nombre M + 1 numérotant le paquet, le nombre M ayant été envoyé au début du paquet interrompu. Lorsque le contexte du paquet interrompu ressortira, il suffira d'émettre le signal FIN DE COMMUNICATION pour effacer ce contexte sauvegardé, comme indiqué plus loin.

Le fait que le bus BC ne transmette qu'une seule sélection de demandeur à chaque cycle, et écrase la sélection précédente si elle n'a pas été élue entre temps, empêche tout choix de plus d'un demandeur éligible, ce qui peut créer une absence d'utilisateur éligible si le précédent émet un message court de moins de 16 VT, se terminant avant la sélection d'un nouvel utilisateur. Ceci est accentué dans le cas de l'exploitation avec préemption, puisque l'émetteur en cours renouvelle sa demande à chaque cycle. Il peut ainsi, après un cycle de contention où il est à nouveau élu, terminer son paquet sur la première VT du cycle suivant, ce qui laisse 15 VT inoccupées (sauf d'éventuelles VT en mode circuit) par absence d'utilisateur éligible.

Pour éviter cette inoccupation, il peut être prévu de mémoriser la suite des sélections faites par le protocole CSMA-CR dans une mémoire de demandeurs éligibles (ME) pendant la transmission des paquets de grande longueur, et utiliser cette liste pour en choisir un, lorsque le bus de données devient libre. Le registre RIE2, représentation succincte de ME, sert à cet effet. Il est exploité comme RIE1 et, de ce fait, la logique associée est la même que celle pour RIE1. C'est pourquoi elle n'a pas été représentée, par souci de clarté de la figure 1.

L'exploitation de ME est la suivante : lorsqu'une information de priorité contenue dans REI1 va être écrasée, elle est transférée dans ME et y est classée en fonction de la valeur de son information de priorité, vis-à-vis des autres déjà inscrites. Pour ce faire, on compare successivement cette nouvelle information à celles déjà inscrites, en commençant par les plus élevées, par exemple. Le résultat de la comparaison indique alors où insérer la nouvelle information dans la liste existante. De façon pratique, on peut laisser physiquement les informations existantes à leur place, à condition d'y adjoindre une adresse de chaînage indiquant la position de l'information de priorité inférieure. Lors de l'insertion de la nouvelle information, son adresse devient l'adresse de chaînage inscrite dans le mot de priorité supérieure, en échange de l'adresse de la station aval qui s'inscrit dans le chainage de ce nouveau mot. Cette mémoire ME est donc capable de fournir l'information de priorité du demandeur le plus prioritaire, en cas de libération du bus BD.

A la libération du bus de données, ce demandeur prioritaire accède à celui-ci, dans la mesure où un mode circuit inscrit en mémoire de trame MT n'est pas prioritaire. Ce demandeur est effacé dans les mémoires de demandeurs éligibles.

Une solution simple et cependant efficace est de supprimer la mémoire de demandeurs éligibles et de ne conserver que le registre RIE1 de demandeur éligible prioritaire, ce qui masquera l'effet de la présence d'un seul paquet court.

Pour que cette solution simplifiée fonctionne avec un système à préemption, il suffit d'avoir un deuxième système CSMA-CR fonctionnant comme l'autre, mais où l'utilisateur en cours de transmission n'accède pas en écriture, ce qui autorise l'éligibilité d'un niveau inférieur.

Il peut y avoir les cas suivants :
- un demandeur prioritaire effectue une demande : les deux systèmes CSMA-CR le déterminent comme prioritaire et il prend le bus de données, le choix du CSMA-CR annexe n'étant pas pris en compte.
- l'utilisateur actuel veut poursuivre sa transmission et est prioritaire : le premier système de contention lui maintient l'accès au médium, le second détermine le demandeur éligible qui prendra le médium s'il se libère dans les 16 temps qui suivent.
- l'utilisateur actuel veut terminer sa transmission et il n'y a pas de demandeur prioritaire : le demandeur de niveau inférieur est choisi par les deux systèmes de contention, le premier prenant la décision, et le choix du second n'étant pas pris en compte.

Exploitation des VT circuits en mode paquet

Les communications en mode circuit nécessitent un acheminement cyclique, pouvant tolérer des modifications de position de la VT dans la trame ou même des retards jusqu'à n trames, égalisés côté utilisateur récepteur. On peut donc transmettre les VT "circuit" selon une exploitation de l'accès au bus BD du type paquet, c'est-à-dire avec une contention pour continuer à transmettre, qui devra s'effectuer à chaque trame.

Les voies circuits peuvent ainsi être considérées comme non affectées à une ou des voies temporelles précises, mais considérées comme des demandeurs devant être élus durant chaque trame. L'information de priorité de ces demandeurs est donc mémorisée, dans chaque station, dans une mémoire, avec un classement par niveaux de priorité. La logique associée effectue des demandes d'accès au bus, par le CSMA-CR, à partir de chaque début de trame. En cas de succès elle achemine les 16 premières VT de plus haut niveau de priorité ainsi éventuellement que celles de priorités inférieures. En même temps qu'elle est élue, elle refait une demande CSMA-CR d'accès au bus destinée à passer les voies circuits 17 à 32, ceci avec le niveau de priorité de la voie circuit 17, et ainsi de suite. Le niveau de priorité des voies circuits transmettant des données ne supportant pas une interruption, est fixé suffisamment haut vis-à-vis des paquets, et en particulier plus haut que celui d'un paquet de même urgence, ce qui permet à la VT circuit de l'interrompre pendant quelques VT sans vraiment le retarder. Les paquets qui peuvent tolérer un retard dans leur acheminement ont un niveau de priorité faible, qui va croître à mesure que diminue la marge de temps calculée pour acheminer le dernier octet de ce paquet.

Il est à noter que les paquets de 16 VT "circuit" réunissent des VT relatives à des abonnés différents dans le cas général. Dans le cas où certaines communications "circuit" n'ont pu trouver de VT libre dans une trame, les données restent mémorisées et la communication demande l'attribution provisoire de 2 VT dans la trame suivante, et ainsi de suite. De façon pratique, on conserve la modularité par 16 VT pour formuler cette demande, qui ne nécessite ainsi qu'un seul accès supplémentaire au système de contention.

## Relâchement des communications et effacement des contextes sauvegardés

Dans le cas d'une communication en mode circuit, le relâchement de la communication s'effectue à partir de la première VT qui était occupée par l'utilisateur. Celui-ci émet sur le fil correspondant du bus de service BS le signal FIN DE COMMUNICATION, après les dernières VT de la communication (avant-dernière trame) et transmet à nouveau le nombre de VT qu'il occupait, dans le premier octet de la dernière trame. Ce nombre est reçu par le circuit logique CL2. Le mécanisme de libération des VT, par effacement dans les mémoires de trames MT des différents utilisateurs, est identique à celui du marquage des VT à l'établissement de la communication.

Dans le cas d'une communication en mode paquet, ce relâchement de la communication s'effectue également par émission d'un signal FIN DE COMMUNICATION par l'utilisateur après la transmission du dernier octet du message.

En variante, il est possible de relâcher une communication en mode circuit au moyen d'une demande par le bus de contention BC où, par exemple, un bit de poids faible, transmis après le mot d'information de priorité avec un niveau de priorité très élevé, indique qu'il s'agit d'une demande de relâchement. Le même processus est envisageable pour le relâchement d'une communication en mode paquet.

Le signal FIN DE COMMUNICATION est appliqué à la mémoire MC pour présenter en sortie de celle-ci le contexte sauvegardé ayant le plus haut niveau de priorité.

Un comparateur C7 compare l'information de priorité du contexte en sortie de la mémoire MC avec l'information de priorité la plus prioritaire inscrite dans la mémoire de trame MT pour la VT en cours, et le résultat de la comparaison est mémorisé par une bascule F11 recevant le signal H sur son entrée d'horloge. La sortie de la bascule F11 est reliée au circuit logique CL1. L'accès au bus de données BD est donné au contexte présent en sortie de la mémoire MC dans le cas où aucune communication prioritaire en mode circuit n'est inscrite en mémoire de trame MT.

Simultanément, la communication dont le contexte est présent en sortie de la mémoire MC est comparée à celle venant du bus de contention BC. Un comparateur C4 compare l'information de priorité du contexte en sortie de la mémoire MC avec l'information de priorité formée par les 15 premiers bits en sortie du registre RI0 et le 16$^{\text{ème}}$

bit en cours de stabilisation sur le bus de contention BC. Le résultat de la comparaison est mémorisé par une bascule F12 recevant le signal H sur son entrée d'horloge et dont la sortie est reliée au circuit CL1. Celui-ci reçoit des diverses informations de priorité et établit les connexions. Ceci est effectué en liaison avec le circuit logique CL2 qui gère la station.

Lorsque la mémoire MC se vide complètement, l'utilisateur qui reprend le bus de données, pour continuer sa communication, émet sur le fil correspondant du bus de service BS un signal ABSENCE PREEMPTION qui resynchronise éventuellement les états logiques de toutes les stations. Ce signal RAZ MC est produit par le circuit logique CL2 et appliqué à la mémoire MC.

L'effacement des contextes en mémoire de trame MT se fait automatiquement au fur et à mesure de la libération des VT à la fin des communications en mode circuit, par effacement ou simplement par modification du pointeur de priorité supérieure.

## Variante de réalisation utilisant un protocole de contention de type CSMA-CD

Le protocole de CSMA-CR nécessite une transmission assez lente, et synchronisée de façon que l'état d'un bit soit stabilisé sur tout le bus de contention lorsqu'il est lu. Un autre protocole aboutissant au même résultat est le CSMA-CD, complété par le fait que l'autorisation pour émettre à nouveau après une collision est déterminée par un nombre fixe spécifique à chaque utilisateur ; par exemple il peut s'agir de son information de priorité. En cas de collision, seuls les utilisateurs d'information de priorité commençant par 1 (poids fort) ont le droit d'émettre. En cas de nouvelle collision, seuls les utilisateurs d'information de priorité commençant par 11 peuvent émettre, et ainsi de suite. Dans le cas où aucun utilisateur ne ré-émet, cela signifie que tous les utilisateurs encore concourants ont le bit i concerné en 0. Ce bit est alors masqué, au bout d'un temps bit et les utilisateurs dont le bit suivant : (i-1) est en 1, ré-émettent. Si à nouveau au bout d'un temps bit, aucun utilisateur n'a ré-émis, le bit (i-1) est masqué, etc jusqu 'à ce qu'un ou plusieurs utilisateur(s) émette(nt). En cas de nouvelle collision, l'algorithme se poursuit jusqu'à l'absence de collision. Il y a donc au maximum (N-1) collisions postérieures à la première si l'information de priorité a N bits. Le temps bit est un peu supérieur au temps maximal de propagation sur le bus de contention.

Une variante possible, permettant souvent d'accélérer la résolution des collisions entre beaucoup d'émetteurs, qui risqueraient de mettre le temps maximal pour être résolues, consiste à appliquer l'algorithme de sélection par l'information de priorité en considérant 2 bits à chaque fois. Ainsi, en cas de collision initiale, seuls les utilisateurs dont l'information de priorité commence par 11 (et non 1 seulement) peuvent ré-émettre, et ainsi de suite. Si aucun utilisateur ne ré-émet au bout d'un temps bit, on revient en arrière d'un bit pour la sélection : les émetteurs ayant une information de priorité commençant par 10 peuvent émettre ; si aucun ne ré-émet encore au bout d'un nouveau temps bit, on masque les 2 bits, et les 2 bits suivants sont considérés, et ainsi de suite. Ainsi dans le cas d'une collision entre beaucoup d'émetteurs d'informations de priorité variées, statistiquement 1 sur 4 (ayant les 2 bits considérés en "11") peut ré-émettre, ce qui converge 2 fois plus vite. Par contre, dans le cas particulier où 2 émetteurs ont des informations de priorité voisines au poids faible près, cela n'amène aucun gain puisqu'il faut lever les ambiguïtés sur tous les bits semblables. Cet algorithme peut être étendu à des blocs de plus de 2 bits ; par exemple on peut choisir des blocs de taille égale à un entier voisin de N/2, si l'information de priorité a N bits, ce qui optimise la convergence en cas de nombreuses collisions. En cas d'absence de ré-émission, nous avons vu qu'il faut reconsidérer les bits qui viennent de servir à la sélection, de façon à tenter de débloquer au moins un émetteur, et si cela n'est pas possible, de masquer ces bits et de considérer le bloc de poids plus faible suivant. La reconsidération des bits indiquée ci-dessus peut aussi se faire par dichotomie sur des blocs de taille inférieure, par exemple N/4, de façon à tenter d'accélérer la sélection, et ceci selon le principe expliqué précédemment. Cela peut se poursuivre sur plus de deux niveaux de dichotomie, avec des blocs N/8, etc.

### Transmission de données analogiques

Le bus données BD peut être utilisé pour transmettre des données numériques, ou bien des données analogiques. Pour transmettre ces dernières, on peut effectuer un échantillonnage à fréquence supérieure au double de la fréquence la plus élevée à transmettre, selon le principe du $2^{ème}$ théorème de SHANNON. En téléphonie temporelle analogique, on échantillonne à 8 kHz, et transmet la valeur analogique lue vers le destinataire ; une voie temporelle, à un instant donné, contient donc une valeur analogique de valeur fixe, au temps d'établissement près des amplificateurs du bus de données.

Une autre possibilité est de découper le signal analogique en tranches temporelles de durées égales, pendant lesquelles le signal peut évoluer, et de le mémoriser dans une mémoire analogique, telle CCD ou ligne à retard, support magnétique, fibre optique, circuit intégré optique, etc. Ensuite on comprime le temps en modifiant une ou des caractéristiques agissant sur la vitesse de propagation vers la sortie de la mémoire : accélération de l'horloge de la CCD, ou lecture glissante du signal mémorisé en lisant celui-ci sur des sorties échelonnées le long du canal de mémorisation, en remontant vers les sorties les plus proches de l'entrée ce qui crée une vitesse de phase accélérant la vitesse relative du signal perçu par le dispositif de lecture. Une diminution de l'indice d'un conducteur optique a le même effet.

En mode circuit à VT affectée, la mémoire analogique a une longueur telle qu'elle permet la mémorisation pendant une trame d'un tronçon de signal analogique de cette durée, et, comporte un dispositif pouvant lire son contenu au début de la même VT de la trame suivante, et comprimant le temps d'un facteur T, s'il y a $\overline{T}$ VT par trame.

Dans le cas où la position de la VT affectée à la transmission peut varier et éventuellement être reportée sur une des trames suivantes, on prévoit la possibilité de maintenir la mémorisation, par rebouclage de la sortie sur l'entrée, ou par continuation du trajet dans des portions suivantes de même longueurs pourvues aussi de dispositifs de lecture. Dans ce dernier cas, une même mémoire analogique peut stocker divers échantillons prélevés successivement, par exemple la totalité d'une trame. Sachant, que dans cette hypothèse, il n'y a plus synchronisme entre :
- la VT d'écriture dans la mémoire analogique, qui est supposée à position fixe dans la trame, et
- la VT de lecture et transmission sur le bus de données, le dispositif de lecture doit être capable d'accéder au front avant du signal mémorisé se propageant dans la mémoire analogique, à tout début de VT quelconque, ce qui signifie qu'il faut autant de sorties intermédiaires qu'il y a de VT dans la trame, pour chacun des tronçons de cette mémoire, chaque sortie intermédiaire pouvant être constituée d'une pluralité de capteurs lus en succession rapide, dans le cas d'une lecture glissante faisant jouer la vitesse de phase.

### Application particulière de l'invention pour l'accès à un médium de communication en forme de boucle

Les principes décrits précédemment sont applicables à une topologie en boucle reliant les stations auxquelles sont raccordés les utilisateurs. Une structure en boucle, à la place d'un bus, présente quelques particularités.

En effet, une station ne perçoit que les informations passant à son niveau et n'a donc pas une vue globale de l'état de la boucle; elle a en quelque sorte un temps local différent de celui des autres stations.

De son côté, un bus peut aussi être exploité avec une notion de temps local propre à chaque station, si ce bus est modulé à haute vitesse et contient, à un instant donné, plusieurs bits se transmettant de façon bidirectionnelle à partir de l'émetteur. Ainsi un bus modulé à 10 Mb/s comporte des tronçons successifs d'environ 30 m relatifs à chaque bit. Cette exploitation permet la transmission de données, ainsi que l'exploitation d'un protocole d'accès au médium avec collision, tel CSMA-CD, puisque plusieurs nouveaux émetteurs simultanés n'ont pas la perception, dans le temps bit, de l'état global du bus s'il a plus de 30 mètres.

Un autre mode d'utilisation du bus, est de le moduler suffisamment lentement pour qu'il n'y ait qu'un seul état à la fin du temps bit; chaque station est en phase avec toutes les autres, du fait qu'elle a une vue globale instantanée. Ceci est utilisé pour un protocole CSMA-CR par exemple, et résoud, en temps réel, les collisions.

Ces deux modes d'utilisation d'un bus ont été décrits précédemment.

Dans le cas d'une boucle, on ne peut effectuer une détection de collision en temps réel, dans le temps bit, puisque les temps locaux sont différents. Le protocole CSMA-CR va donc être remplacé par une suite de comparaisons similaires, mais avec la différence que :
- les stations vont effectuer la comparaison l'une après l'autre;
- ces comparaisons peuvent être effectuées bit à bit au fil de l'eau comme pour le CSMA-CR avec la contrainte d'avoir un état physique privilégié, ou bien en une seule opération, après stockage temporaire du mot de priorité reçu de la boucle, et réémission de ce même mot, ou du mot de priorité local, s'il est supérieur.

On voit donc que l'utilisation d'une boucle permet de traiter la contention dans le temps d'un tour de propagation sur la boucle, comprenant le temps de propagation physique et le temps de stockage temporaire dans chaque station. De son côté, un bus nécessite N fois le temps maximum de propagation, s'il y a N bits de priorité.

## Gestion globale de la boucle

Du fait de l'existence d'un temps local propre à chaque station, celles-ci n'ont pas une vue globale et instantanée de l'état de la boucle. Il est donc nécessaire d'avoir une station spécifique de contrôle de boucle chargée de définir des instants ou des informations de référence pour synchroniser les stations, en particulier pour leur accès au canal de signalisation. Ceci peut être effectué par l'envoi cyclique d'un champ d'information, contenant un motif de resynchronisation trame, et suivi de la zone réservée au mot de contention.

Cette notion de trame est nécessaire d'une part pour transmettre des VT en mode circuit, et d'autre part pour pouvoir lire le canal de signalisation, repéré de par sa récurence.

Dans le cas où il n'y a pas de mode circuit à acheminer, il est alors possible de supprimer cette notion de trame. Cela implique les conditions suivantes :
- le canal de données n'est plus "transparent", en ce sens que certaines successions de bits sont interdites pour les données, et réservées au codage de certaines signalisations, tel un "drapeau" indiquant que les données qui le suivent sont de la signalisation, et inversement : sont des données, à la fin de cette transmission de signalisation.
- les données de type voix, qui nécessitent un acheminement à débit moyen constant, et qui sont supposées être transmises par des paquets, dans l'hypothèse prise ci-dessus, doivent avoir un système régulateur de débit en émission qui supplée à la disparition de la trame cyclique, et le tampon régulateur expliqué précédemment en réception. Ce système émettra des demandes de transmission, en jouant sur la fréquence de ces demandes et leur niveau de priorité, et en transmettant la totalité des octets de parole stockés disponibles au moment où il accède à la boucle.

## Fonctionnement détaillé de l'accès à la boucle

Une transmission de message nécessite un premier tour complet d'une trame émise par une station contrôlant la boucle, permettant d'obtenir en retour la valeur maximale du niveau de priorité des demandeurs, chacun de ceux ayant une priorité supérieure à celle reçue de la boucle, inscrivant, pour la réémission dans la boucle, sa priorité dans le champ unique prévu à cet effet et écrasant la précédente. Au deuxième tour, indiqué par un bit dans la trame, généré par la station de contrôle de boucle, la première station dont le code de priorité est égal à ce niveau maximal, qui est réémis par la station de contrôle de boucle, prend la boucle pour transmettre son message, et l'indique par un bit d'occupation dans la trame. Ge bit empêche les stations aval, de même niveau de priorité, de prendre le canal. Le niveau de priorité des demandeurs est figé pendant ce deuxième tour et il ne peut apparaître de nouveaux demandeurs lors de ce deuxième tour. Le message peut avoir une durée quelconque, sachant que le rebouclage est coupé dans la station émettrice.

Le niveau de priorité des utilisateurs potentiels est mémorisé dans un tampon dans chaque station, qui sert de référence lors du déroulement du protocole d'accès à la ligne. Ce tampon est remis à zéro :
- soit lors du premier tour, lorsque la station détecte qu'elle ne peut accéder à ce canal;
- soit au deuxième tour, pour les stations de même niveau de priorité situées en aval de celle qui prend le canal.

Le rôle de ce tampon est de maintenir une valeur constante au niveau de priorité servant à la contention, lors du deuxième tour, même si le niveau réel de priorité évolue dans le temps, suite à une décision de l'application pour augmenter la probabilité d'accès au médium.

Il peut y avoir contention à chaque tour, ou à chaque trame, ou éventuellement plus souvent ou moins souvent, même si le message n'est pas terminé. Pour ce faire, il est émis de façon cyclique par exemple à chaque tour, par la station de contrôle de la boucle, une trame destinée à recevoir les mots de priorité des divers demandeurs potentiels, définissant un canal de signalisation en plus du canal de données. Il faut évidemment que la station pilotant la boucle adjoigne à chaque contention, qui s'étend sur deux tours, un identificateur permettant de la distinguer des autres contentions qui se déroulent simultanément; par ailleurs, le registre tampon de chaque station doit être géré en temps partagé pour ces contentions.

Dans le cas d'une exploitation à contention permanente, si un demandeur a une priorité supérieure à celle de l'émetteur en cours, celui-ci s'interrompt lorsqu'il détecte, lors du deuxième tour de ce mot de priorité, qu'il n'a plus la priorité maximale. Il est à noter que, du fait de la différence des temps locaux entre stations sur la boucle, un nouvel émetteur, situé en amont de l'émetteur ancien, peut prendre l'accès à celle-ci alors que l'ancien émetteur continue à émettre en aval jusqu'à ce qu'il reçoive le mot de priorité, suivi du début du message de l'autre émetteur. La coupure de rebouclage indiquée précédemment est effectuée au niveau de la réémission du canal de données, mais le canal signalisation est toujours maintenu, si nécessaire. La réception d'un mot de priorité supérieur entraîne la refermeture instantanée du canal données.

Un tel fonctionnement asynchrone est voisin de celui, bien connu, utilisant un jeton, mais original en ce qu'il y a deux tours, le premier servant à effectuer une comparaison des priorités, chaque station pouvant écrire sa priorité, si elle est supérieure, contrairement au protocole usuel à jeton, le deuxième tour servant à adresser l'autorisation d'accès en écriture au médium vers la première station de priorité maximale. Ce dernier point est aussi original par rapport à la technique classique à jeton, puisqu'il y a adressage implicite vers la station sélectionnée, et que le jeton seul n'autorise pas n'importe qu'elle station à émettre.

Un autre aspect indiqué ci-dessus, est que cette autorisation est implicite et détectée par la station, par comparaison avec sa priorité; les autres stations n'ont pas connaissance de l'identité de cette station tant qu'elle n'a pas pris le canal.

## Revendications

1. Procédé d'accès à un médium de communication partagé entre plusieurs utilisateurs potentiels ayant différents niveaux de priorité et susceptibles de transmettre en mode circuit ou en mode paquet dans une trame temporelle de longueur fixe en utilisant un protocole de contention à temps de décision borné supérieurement, un utilisateur demandeur émettant sur un bus de contention, commun aux utilisateurs, une information de priorité comprenant son niveau de priorité et son adresse, caractérisé en ce que :
- chaque utilisateur mémorise les informations de priorité parvenant par le bus de contention pour déterminer, par comparaison entre les informations de priorité des utilisateurs demandeurs, celui qui est autorisé à émettre dans chacune des voies temporelles élémentaires formant la trame temporelle, et
- tout utilisateur ayant commencé à émettre dans une ou plusieurs voies temporelles est susceptible d'être interrompu, sur une ou plusieurs parmi lesdites voies temporelles, avant la fin de son émission par un autre utilisateur demandeur effectuant une préemption en raison d'une information de priorité supérieure, les interruptions successives pouvant être enchaînées.

2. Procédé selon la revendication 1, caractérisé en ce que les contextes des communications interrompues sont sauvegardés dans l'ordre des interruptions successives et ressortent dans l'ordre inverse lorsque le médium de communication redevient disponible, les contextes des communications le plus récemment interrompues ressortant les premiers.

3. Procédé selon l'une quelconque des revendications 1 et 2, caractérisé en ce que la préemption est temporisée avec une durée dépendant du type d'utilisateur susceptible de subir la préemption.

4. Procédé selon l'une quelconque des revendications 1 à 3, caractérisé en ce que le niveau de priorité d'un utilisateur venant d'accéder au médium de communication est incrémenté automatiquement d'un nombre prédéterminé.

5. Procédé selon l'une quelconque des revendications 1 à 4, caractérisé en ce que une ou plusieurs voies temporelles de position fixe dans la trame sont attribuées à chaque utilisateur demandeur fonctionnant en mode circuit.

6. Procédé selon l'une quelconque des revendications 1 à 4, caractérisé en ce que les utilisateurs émetteurs en mode circuit redemandent, par le bus de contention, en début de chaque trame, l'attribution d'une ou plusieurs voies temporelles, les utilisateurs de plus haut niveau de priorité étant servis les premiers, et leurs voies temporelles regroupées selon un nombre déterminé pour n'effectuer qu'une seule demande, sur le bus de contention, pour ce nombre de voies temporelles.

7. Procédé selon la revendication 6, caractérisé en ce que le niveau de priorité d'un utilisateur demandeur demandant l'attribution d'une ou plusieurs voies temporelles et n'ayant pas obtenu satisfaction au cours d'une trame croît à mesure qu'approche la fin de la trame.

8. Procédé selon la revendication 7, caractérisé en ce que le niveau de priorité d'un utilisateur ayant demandé l'attribution d'une ou plusieurs voies temporelles, et n'ayant pas eu satisfaction au cours d'une trame précédente, continue à croître et est nettement augmenté au début de la trame n suivante, n étant un nombre entier prédéterminé.

9. Procédé selon la revendication 8, caractérisé en ce qu'un retard variable, pouvant atteindre le total des durées de n trames pendant lesquelles un utilisateur émetteur n'arrive pas à accéder au médium de communication, est appliqué au niveau de l'utilisateur récepteur pour compenser la gigue due à l'incertitude sur le retard à l'accès aux voies temporelles en émission.

10. Procédé selon l'une quelconque des revendications 5 à 9, caractérisé en ce que les demandes d'attribution de voies temporelles par les utilisateurs émetteurs en mode circuit ne sont réitérées que toutes les T trames, T étant un nombre entier prédéterminé.

11. Procédé selon l'une quelconque des revendications 5 à 10, caractérisé en ce qu'une même voie temporelle est partagée par plusieurs utilisateurs en mode circuit soit temporellement en fonction de trames successives, soit spatialement au niveau du mot transmis sur le médium de communication dans une voie temporelle.

12. Procédé selon l'une quelconque des revendications 1 à 11, caractérisé en ce que le niveau de priorité d'un utilisateur émetteur en mode paquet, ayant obtenu l'accès au médium de communication, augmente, en cas d'interruption, en fonction inverse de la marge de temps calculée entre l'instant auquel le dernier bit du message serait émis, si l'utilisateur retrouvait immédiatement l'accès au médium de communication, et l'instant d'émission pour lequel le message arriverait trop tard chez l'utilisateur récepteur.

13. Procédé selon l'une quelconque des revendications 1 à 12, caractérisé en ce que le niveau de priorité d'un utilisateur dont la transmission a été interrompue est augmenté lorsque cet utilisateur reprend le médium de communication.

14. Procédé selon l'une quelconque des revendications 1 à 13, caractérisé en ce que la contention d'accès au médium de communication est réglée par un protocole de type CSMA/CR.

15. Procédé selon la revendication 14, caractérisé en ce que l'information du dernier bit de l'information de priorité d'un utilisateur demandeur transmise sur le bus de contention, est utilisée avant la fin du temps bit pour sélectionner éventuellement cet utilisateur dès le temps bit suivant.

16. Procédé selon l'une quelconque des revendications 14 et 15, caractérisé en ce que les bits de l'information de priorité d'un utilisateur demandeur sont transmis sur le bus de contention au rythme de défilement des voies temporelles.

17. Procédé selon l'une quelconque des revendications 14 et 16, caractérisé en ce que le protocole de contention est réalisé de façon non synchronisée avec le défilement des voies temporelles.

18. Procédé selon l'une quelconque des revendications 1 à 13, caractérisé en ce que la contention d'accès au médium est réglée par un protocole de type CSMA-CD modifié à temps de contention borné supérieurement.

19. Procédé selon l'une quelconque des revendications 1 à 18, caractérisé en ce que la contention d'accès au médium est effectuée, d'une part, entre tous les utilisateurs demandeurs au moyen d'un premier bus de contention et, d'autre part, entre tous les utilisateurs demandeurs, à l'exception de celui ayant l'accès au médium de communication, au moyen d'un deuxième bus de contention, le résultat de la contention effectuée au moyen du deuxième bus de contention étant utilisé si l'utilisateur ayant l'accès au médium libère celui-ci au cours du cycle actuel de contention, les résultats successifs des contentions étant mémorisés et classés pour ressortir l'information de priorité la plus élevée.

20. Procédé selon l'une quelconque des revendications 1 à 15, caractérisé en ce que le médium de communication est une boucle physique gérée par une station pilotant celle-ci.

21. Dispositif d'accès à un médium de communication partagé entre plusieurs utilisateurs potentiels ayant différents niveaux de priorité et susceptibles de transmettre en mode circuit ou en mode paquet dans une trame temporelle de longueur fixe en utilisant un protocole de contention à temps de décision borné supérieurement, ledit dispositif comportant une pluralité de stations reliant chacune plusieurs utilisateurs au médium de communication, et un ensemble de canaux de communication reliés à toutes les stations et comprenant des canaux de contention, de données, de service et sémaphore, chaque station comportant :
- un circuit (CEI) destiné à émettre, sur un canal de contention commun aux différents utilisateurs, une information de priorité comprenant le niveau de priorité et l'adresse particulière de l'utilisateur, caractérisé en ce que chaque station comprend en outre :
- des moyens de comparaison entre les informations de priorité d'utilisateurs demandeurs cherchant à accéder simultanément au médium, de manière à déterminer celui des utilisateurs demandeurs qui est autorisé à émettre dans chacune des voies temporelles élémentaires formant la trame temporelle, tout utilisateur demandeur ayant commencé à émettre dans une ou plusieurs voies temporelles étant susceptible d'être interrompu avant la fin de son émission par un autre utilisateur demandeur effectuant une préemption en raison d'une information de priorité supérieure,
- des moyens (RI0, RIE1, RIE2) de mémorisation des informations de priorité parvenant par le canal de contention, et
- des moyens (MC, MT) de sauvegarde des contextes de communications éventuelles successivement interrompues.

22. Dispositif selon la revendication 21 caractérisé en ce que les moyens de mémorisation d'informations de priorité comprennent un registre d'identité éligible (RIE1) dans lequel est stockée l'information de priorité la plus élevée parmi celles transmises sur le canal de contention par les utilisateurs demandeurs, à la fin du cycle actuel.

23. Dispositif selon l'une quelconque des revendications 21 et 22, caractérisé en ce qu'il comporte, au niveau de chaque station, une mémoire de trame (MT) dans laquelle sont stockées, à des adresses correspondant aux voies temporelles de la trame, les informations de priorité et les contextes des utilisateurs en mode circuit occupant ces voies temporelles.

24. Dispositif selon la revendication 23, caractérisé en ce qu'il comporte, au niveau de chaque station, un compteur de voies temporelles (CT2), pour compter les voies temporelles depuis le début de chaque trame, et un registre (R1) relié au compteur pour stocker la sortie de celui-ci avec un retard d'une voie temporelle, et en ce que le contenu du compteur de voies temporelles (CT2) ou du registre (R1) relié à celui-ci est utilisé pour adresser la mémoire de trame (MT) en lecture ou en écriture.

25. Dispositif selon les revendications 22 et 23, caractérisé en ce qu'il comporte, au niveau de chaque station, des moyens (C6) pour comparer le contenu du registre d'information de priorité éligible (RIE1) avec celui de la mémoire de trame (MT) pour chaque voie temporelle.

26. Dispositif selon les revendications 22 et 23, caractérisé en ce qu'il comporte un registre d'entrée série (RI0), dans lequel sont successivement stockés les bits de l'information de priorité de l'utilisateur demandeur ayant l'information de priorité la plus élevée parmi ceux transmettant leur information de priorité sur le bus de contention (BC), et des moyens (C5) pour comparer le contenu de la mémoire de trame (MT), pour chaque voie temporelle, avec le contenu dudit registre à entrée série (RI0), à l'exception du dernier bit, complété avec le dernier bit en cours de stabilisation sur le bus de contention (BC).

27. Dispositif selon la revendication 25, caractérisé en ce qu'il comporte, au niveau de chaque station, des moyens (C1) pour comparer le contenu du registre d'information de priorité éligible (RIE1) avec celui d'une mémoire d'information de priorité locale (MI) contenant l'information de priorité de l'utilisateur local.

28. Dispositif selon la revendication 26, caractérisé en ce qu'il comporte, au niveau de chaque station, des moyens (C2) pour comparer le contenu d'une mémoire d'information de priorité locale (MI) contenant l'information de priorité de l'utilisateur, avec celui dudit registre à entrée série (RI0), à l'exception du dernier bit, complété avec le dernier bit en cours de stabilisation sur le bus de contention (BC).

29. Dispositif selon la revendication 22, caractérisé en ce que les moyens de sauvegarde de contexte comprennent une mémoire de type FILO (MC) dont l'entrée est reliée à la sortie du registre d'identité éligible (RIE1), l'information de priorité d'un utilisateur interrompu étant stockée dans la mémoire FILO (MC) en réponse à l'interruption de cet utilisateur, et l'information d'identité disponible en sortie de la mémoire de type FILO étant celle de l'utilisateur le plus récemment interrompu.

30. Dispositif selon les revendications 26 et 29, caractérisé en ce qu'il comporte, au niveau de chaque station, des moyens (C4) pour comparer l'information en sortie de la mémoire (MC) de type FILO avec le contenu du registre à entrée série (RI0), à l'exception du dernier bit, complété par le dernier bit en cours de stabilisation sur le bus de contention (BC).

31. Dispositif selon les revendications 26 et 29, caractérisé en ce qu'il comporte, au niveau de chaque station, des moyens (C3) pour comparer l'information en sortie du registre (RIE1) avec le contenu du registre à entrée série (RI0) à l'exception du dernier bit, complété par le dernier bit en cours de stabilisation sur le bus de contention (BC).

32. Dispositif selon les revendications 24 et 29, caractérisé en ce qu'il comporte, au niveau de chaque utilisateur, des moyens (C7) pour comparer, pour chaque voie temporelle, l'information en sortie de la mémoire (MC) de type FILO avec le contenu de la mémoire de trame (MT).

33. Dispositif selon l'une quelconque des revendications 21 à 32, caractérisé en ce que la mémoire de trame est agencée pour mémoriser à chaque adresse correspondant à une voie temporelle, l'information de priorité de l'utilisateur en mode circuit à qui la voie temporelle est actuellement attribuée ainsi que, dans l'ordre de leurs interruptions successives, les informations de priorité des utilisateurs en mode circuit à qui la voie temporelle avait été attribuée et qui ont été interrompus.

34. Dispositif selon l'une quelconque des revendications 21 à 33, caractérisé en ce qu'il comporte un premier et un deuxième bus de contention, le premier bus de contention recevant les informations de priorité de tous les utilisateurs demandant l'accès au médium de communication et le deuxième bus de contention recevant les informations de priorité de tous les utilisateurs demandant l'accès au médium de communication à l'exception de celui actuellement en cours d'émission.

35. Dispositif selon l'une quelconque des revendications 21 à 34, caractérisé en ce que les bus sont portés par une boucle gérée par une station pilotant celle-ci.

Fig. 1

Fig. 2

Fig-3

Fig-4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 122 765 (A.T.T.)<br>* Page 4, ligne 30 - page 5, ligne 32; page 8, lignes 11-14; page 12, lignes 3-19; page 15, ligne 29 - page 16, ligne 21; figures 1,9 * | 1 | H 04 L 12/64<br>H 04 L 12/40 |
| A | | 2-8,10-13,18-19,21 | |
| | --- | | |
| Y | 6TH ANNUAL PHOENIX CONFERENCE ON COMPUTERS AND COMMUNICATIONS, Scottsdale, Arizona, 25 - 27 février 1987, pages 427-431, IEEE, New York, US; D.R. VAMAN et al.: "A dual-channel local area network (DC-LAN) for intergrated voice and data transmission"<br>* Page 427, colonne de gauche, lignes 20-41; page 427, colonne de droite, lignes 42-49 * | 1 | |
| | --- | | **DOMAINES TECHNIQUES RECHERCHES (Int. Cl.5)** |
| A | IDEM | 2-8,10-13,18-19 | H 04 L |
| | ---       -/- | | |

Le présent rapport a été établi pour toutes les revendications

| Lieu de la recherche | Date d'achèvement de la recherche | Examinateur |
|---|---|---|
| LA HAYE | 19-06-1990 | DE LA FUENTE DEL AGUA P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)

Office européen
des brevets

**RAPPORT DE RECHERCHE EUROPEENNE**

Numero de la demande

EP 90 40 0911

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | ELECTRONICS AND COMMUNICATIONS IN JAPAN, PART 1: COMMUNICATIONS, vol. 69, no. 6, juin 1986, pages 72-78, Scripta Technica, Inc., Silver Spring, Maryland, US; S. TOKINAGA: "A traffic control method by adaptive reservation scheme using subchannel on bus-type local networks for integrated voice and data" <br> * Page 72, colonne de gauche, lignes 1-17; page 72, colonne de droite, lignes 5-11; page 73, colonne de gauche, ligne 29 - page 73, colonne de droite, ligne 43; page 74, colonne de gauche, ligne 17 - page 74, colonne de droite, ligne 2; figures 1,2 * <br> --- | 1 | |
| A | IDEM <br><br> ----- | 2-8,10-13,18-19 | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 19-06-1990 | DE LA FUENTE DEL AGUA P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P0402)